# EUROPEAN PATENT APPLICATION

(11) **EP 0 969 056 A1**
(43) Date of publication of application: **05.01.2000**
(21) Application number: 98109515.1
(22) Date of filing: 26.05.1998
(51) Int. Cl.: C09D 189/00, C09D 189/02

(54) **Method for preparing an improved protein coating and articles thereof**

(71) Applicant: Aventis Research & Technologies GmbH & Co KG, 65926 Frankfurt am Main (DE)
(72) Inventor: Kretzschmar, Gerhard, Dr., 65760 Eschborn (DE); Hoppe, Hans-Ulrich, Dr., 65929 Frankfurt (DE)

(57) **Abstract**

The present invention relates to a method for preparing a protein coating by crosslinking proteinaceous material in water and applying it onto a solid. The protein coating is water-resistant but can be removed and protects in particular technical articles such as a car, a bicycle, a pipe, a frame, a ceramic, a stone, a concrete, a glass paint, a wood, a cork, a wallpaper; a cardboard, or any part thereof.

## Description

The present invention relates to a method for preparing a protein coating by crosslinking proteinaceous material and applying onto a solid. The protein coaling is biocompatible and water-resistant but can be removed and protects in particular technical articles such as a car, bicycle, a pipe, a frame, a ceramic, a stone, a concrete, a glass pane, a wood, a cork, a wallpaper, a cardboard or any part thereof.

Whereas most resins for coatings are designed to improve the properties of products virtually based on established raw materials in order to obtain coatings with long lifetimes, affording good protection, and which could be produced as cost-effectively as possible, little attention has been paid to tailor-made, ecologically acceptable binders which may sufficiently fulfill the technical requirements within a rather limited lifetime. On the contrary, most emphasis is spent on low-solvent paints, powder-coatings and water-borne coating materials in the broadest sense for resins of long-term durability, with relatively little attention being paid to the question of the disposal and recycling of the paints and the disposal of the coated articles.

However, for many technical and everyday applications only temporary coatings are required which may fulfill the specific technical requirements only for the lifetime which has been scheduled for this type of coating, thereby matching all other economical and ecological requirements, for instance: low-cost raw materials, preferably raw materials based on renewable resources; low-energy and low-cost production process; no organic solvents; tailor-made durability; easy removal from the substrate without use of organic solvents; ecologically acceptable disposal; applicable as temporary coatings for as much applications as possible.

Fabric-new cars for example, are protected by temporary polyolefin or polyester films, like polyethylene (PE) wax emulsions or polyethylene-terephthalate (PET) in low-boiling organic solvents. Films are formed after evaporation of the organic solvents or they are fixed by the use of glues, and after use they are stripped or peeled off by manual work. The organic solvents and the plastic waste are environmental burdens which may require additional measures for disposal and recycling. Especially the low-boiling organic solvents pose problems in terms of safety and health during the film application and drying process, and after evaporation into the atmosphere. On the contrary, the use of naturally occurring biopolymers like polysaccharides or proteins offers some inherent advantages over the synthetic polymers in terms of the extent of biocompatibility and biodegradability.

In the middle ages natural products such as protein and Arabian rubber were used for the manufacture of water-borne coatings and pigment preparations (Resins for Coatings, Chemistry, Properties and applications, Editors: Dieter Stoye and Werner Freitag, Hanser Publishers, Munich, Vienna, New York, 1996, p. 380). But unfortunately, their barrier, mechanical and cost-related properties in general are not sufficient to substitute the synthetic polymers on a larger scale. Today, biopolymers are only used in niche markets, for instance in the fabrication of edible and biodegradable materials for food preservation, although some biopolymer materials have been proposed to produce alternative packaging materials for non-food applications. But until today, only the combination of synthetic polymers with minor amounts of biopolymers as filler materials, e.g. starch incorporated in polyethylene matrices, has found some niche applications, mainly in packaging materials (see e. g. Martin-Polo, M. O., *Advances in minimally processed food packagin*g, in Food Preserv. Moisture Control, ISOPOW Pract.II, 1995, 849-868, Editors Barbosa-Canovas et al.).

Products from biopolymers, like starches and cellulose, which have been incorporated into synthetic, non-renewable polymer matrices, e.g. of polyethylene or polyacrylate, are predominantly used, e.g. as packaging or superabsorbent materials. In a similar manner, compositions for temporary coatings of concrete which are formulated from an acrylic copolymer or a styrene copolymer latex and a polysaccharide to form a blend polymer have been described in EP 0609691. Similar blends from nylon fibres and starch are known as easily peelable coating compositions for artificial turfs.

In addition, blends from butadiene/styrene latex and starch are known to provide temporary coating materials. Other blends from synthetic binders, cellulosic fibres and silicone water repellents are known as coating materials for the temporary protection of fully assembled automobiles, to protect the topcoat from colour changes. In a similar way, polyvinyl acetate and cellulose or starch was blended and mixed with sodium alkylsilanoate as a hydrophobic agent to provide temporary aqueous coatings for vehicles and apparatus.

DE 3223443 discloses the use of starch and starch derivatives together with a wetting agent and a plasticiser as a temporary coating for automobiles, piping, frames and the like. The starch derivative can be acetylated starch or crosslinked starch, blended into resins of the type ketone/formaldehyde, urea/formaldehyde or melamine/formaldehyde and must be hydrophobised with a siliconate.

Soy protein-based and starch-based thermoplastic compositions for preparing moulded articles by injection moulding under pressure and heating above 100°C in extruders have been described e.g. in US 5,523,293, however, these compositions are not water-resistant and can not be used to prepare protein films according to the present invention.

In EP 593123 a method for preparing a foil or a coating based on water-insoluble polymers has been described. However, the coatings were prepared without crosslinking and are only useful as coatings for food, especially as edible protectants.

In WO 93/10827 a process for hydrophilic coating of medical utensils has been described by wetting these utensils with a protein-containing solution and then drying them under very harsh thermal conditions at a temperature between 1000-260°C, most preferably between 160°-180°C.

In US 4,016,337 a water-dispersible edible composition containing mainly proteins, fat, glycerol and a silicon dioxide filler which is sprayable to prepare edible thin films has been described.

One object of the present invention is to provide coatings derived from aqueous protein dispersions or solutions which are suitable as protecting layers for objects such as cars, pipes, frames, ceramics, stones, concrete, glass panes and the like and which later on, if desired, may be easily washed-off after having served as temporary protective coatings but which are water-resistant for at least a certain period of time.

Surprisingly, it has now been found that coatings having such performance can be obtained by using a composition containing cross-linked proteinaceous materials as coating materials. Very surprisingly, the films prepared from the aqueous protein dispersions or solutions on the one hand have sufficient resistance to mechanical and environmental influences, but on the other hand they may be removed easily by water treatment and with the help of mechanical force, detergents and/or with proteolytic enzymes.

Therefore, one embodiment of the present invention is a method for preparing a coating, wherein a reaction mixture is applied on a solid, which reaction mixture is obtainable from a process comprising the following steps:
(a) dispersing about 5-50 wt.-%, preferably about 10-35% wt.-%, in particular about 10-25 wt.-% of a proteinaceous material in water,
(b) adding about 0,1-25 wt. -%, preferably about 1-25 wt.-%, in particular about 5-20 wt.-% of a crosslinking agent, (all relative to the protein content) and
(c) allowing reaction between said proteinaceous material and a crosslinking agent containing an epoxide or polyepoxide, preferably an epichlorohydrin-modified polyamine, epichlorohydrin-modified polyamide, epichlorohydrin-modified polyamidoamine or epichlorohydrin-modified amine-containing backbone polymer; or any combination thereof

The solid is in particular an article, preferably a technical articles as examplified according to the present invention.

According to the present invention, the reaction mixture to be prepared is preferably composed of the following ingredients and prepared as described in the following preferred process:

### 1. Protein raw material

The proteinaceous material to be used in the process of the invention can be derived from any natural animal-, plant- and/or microbe-derived protein such as keratin, gelatine, collagen, gluten, soy protein, casein, etc., or any combination thereof.

The proteinaceous raw material may be pre-treated in order to obtain a dispersible protein in the aqueous medium. Such pre-treatment may be performed by well known procedures, like denaturation by treatment with heat, surface-active compounds, e.g. (sodium) dodecyl sulphate, chaotropic agents such as urea, guanidine or guanidinium salts, calcium chloride and the like, by acid or alkaline hydrolysis resulting in reduced molecular weights through hydrolysis in the main chains, by deamidation of glutamine and asparagine residues through hydrolysis in the side chains, in acidic or alkaline medium resulting in increased dispersibility or solubility. It is equally well known that the processing of certain proteins, like soy protein can be improved by treating the protein with a reducing agent to enhance the dispersability of the protein. The reducing agent e.g. may be an (alkali metal) sulfite, an (alkali metal) bisulfite or hydrogen sulfide to cleave the disulfide bonds in the protein molecule to SH-groups and thus increasing the protein dispersibility. In this manner, the forming of thermoplastic protein films by the extrusion of the reduced protein is described in e.g. US 3,615,715. The proteinaceous material can also be pre-treated by a proteolytic enzyme.

In order to obtain optimised coating formulations in terms of film properties and cost of raw materials, blends of the respective proteins, e.g. casein/soy protein, gelatine/casein, casein/gluten, soy protein/gluten/casein may be used likewise as raw materials.

### 2. Crosslinkers/curing agents

In general, the choice of the crosslinking or curing agent influences the desired strength and water resistance in the temporary coatings. The choice usually is governed by the conditions required to dry and cure the coating in a reasonable period of time, and the attainment or requisite strength. It may depend further on the protein raw material and its pre-treatment, on the choice of the other additives and on the whole process to prepare the aqueous dispersions. The curing mechanism can not only determine the curing conditions such as temperature and time, but also the maximum or minimum film thickness, the resistance to chemicals, water and mechanical stress, and the overall areas of application of each binder combination. The curing agent, which is bonded to two different binding sites of the protein binder, usually acts as a crosslink bridge. Most of the crosslinking components are mentioned below to illustrate the variety of potential modifications and adaptions to the specific applications and surfaces to be covered by the invented temporary film forming protein dispersions, and they have been used as speciality additives in a myriad of speciality products, but not to prepare crosslinked protein dispersions for temporary protective films.

Suitable additional crosslinking or curing agents include aldehydes such as formaldehyde, glyoxal and glutaraldehyde, diisocyanate, (poly)isocyanates, bis(meth)acrylates such as N,N-ethylenebis(meth)acrylate, (poly)aziridines, carbodiimides, resins such as melamine-formaldehyde (MF), urea-formaldehyde (UF) or benzoguanidine-formaldehyde, epoxides such as epichlorohydrin, polyepoxide-polyamine or polyepoxide-polyamidoamine, or diglycidyl ether, a glycidyl ester, or their polymer derivatives such as cationic polyepoxides, polyvalent cations such as calcium or zinc, acetoacetates, enzymatic crosslinkers, or other homo-bifunctional, hetero-bifunctional or polyfunctional reagents capable of reacting with functional groups present in proteins. The preferred crosslinking or curing agents are glyoxal, glutaraldehyde, polyisocyanates, bis(meth)acrylates such as N,N-ethylenebis(meth)-acrylamide, carbodiimides, MF- or UF-resins and (poly)epoxides and polyaziridines, mostly preferred are glyoxal, polyisocyanates, polyepoxides and polyaziridines, and particularly preferred are the polyepoxides.

The polyisocyanates are preferred over diisocyanates because of their higher functionality and the resulting crosslinking density that can be achieved in the film. The raw materials industry supplies a wide range of polyisocyanates as building blocks for the known two-pack polyurethane coatings. Commercially available examples include the TDI types Basonat PLR 8525® (BASF, Ludwigshafen, Germany), Desmodur L® (Bayer, Leverkusen, Germany), Polurene AD 75® (Sapici, Caronno Pertusella VA, Italy), trimerised TDI-types like Desmodur IL® (BASF), Polurene 60T® (Sapici), mixed TDI/HDI-types like Desmodur HL®, HDI biuret-type like Basonat HB 175® (BASF), or Tolunate HDB® (Rhone-Poulenc, Paris, France), HDI trimer type like Desmodur N 3300® (Bayer) or Basonat HI 100® (BASF), low-viscosity types like Desmodur N 3400® (Bayer), prepolymers composed of polyols with excess di- or polyisocyanates like Desmodur T® (Bayer) or Beckocoat® (Hoechst, Frankfurt, Germany) and other commercial polyisocyanates which are usually mixtures of largely analogue compounds.

The same applies to the carbodiimides commercially used to crosslink latexes having carboxyl functional groups on the surface of their particles, or to crosslink colloidal dispersions of solubilised alkyls or acrylics, or to cross-link soluble or emulsion polyurethane polymers. The carbodiimides are usually the dehydrated urea compounds derived therefrom (Robert D. Athey in *Additives for water-borne coatings*, Part 7: Curatives, European Coatings Journal 11/1996, 569).

The polyepoxide type crosslinkers are mainly derived from the O- and N-glycidyl-compounds and from glycidylesters. Typical examples for those include epoxy resins combined with di- or polyamines or polyamidoamines. Typical epoxy components include commercial products like Araldit® (Ciba, Basel, Switzerland), Beckopox® (Hoechst), D.E.R.® (DOW Chemical, USA), Epikote® (Shell, Netherlands), Epodil® (Anchor, Waterbury, Connecticut, USA), Eurepox® (Witco, USA), Grilonit® (Ems-Chemie,Hldg AG, Switzerland), Kelpoxy® (Reichhold, Triangle Park, North Carolina, USA), Polycup172®, Polycup1884®, Kymene®, Kycoat23® (Hercules, Wilmington, DE, U.S.A.) and Resox® (Synthopol Chemie, Buxtehude, Germany), to name only a few, which are based for instance on glycidylethers, esters, epichlorohydrin, butane-1,4-diol-diglycidylether, monoglycidylethers and epichlorohydrin polyamide condensates from dicarboxylic acids and polyalkylene polyamines. The di- or polyamine or polyamidoamine components in these systems are usually used in modified form, for instance either by the reaction of di- or polyamines (alkylene amines) with mono- or dimeric fatty acids to polyaminoamides, by further reaction of the polyamidoamides with epoxides, e.g. with epichlorohydrin, or by the reaction of epoxy resins with the amines in a determined stoechiometry. The properties of these cationic products can be adjusted over wide ranges via the amines, epoxides and carboxylic acids used, and potential crosslinking activity for instance may be generated via azetidinium moieties by self-arresting inherent crosslinking via dilution, pH or the nature of the amino groups involved. Typically used amine components include polyamidoamine Type 250 Genamid® (Clariant AG, Muttenz, Switzerland), PAA adducts, EDA adducts (ethylenediamine), DETA adducts (diethylentriamine), TETA-adducts (triethylenetetramine). Most of these and other amine components are components of the two-pack EP coating systems, e.g. in Epilink® (Akzo, Arnhem, Netherlands), Polyamine® (Bayer), Araldit® (Ciba) and Beckopox H®& (Hoechst), to name only a few.

A typical melamine-formaldehyde (MF) crosslinker resin for the preparation of a dispersion according to the invention is the water-dispersible resin UrecolSMV® (BASF, Leverkusen, Germany).

Typical polyaziridine crosslinkers for the preparation of a dispersion according to the invention are the IONAC® type crosslinkers like PFAZ-322 (Sybron Chemicals, Birmingham, NJ, USA) or CX-100 (Zeneca, Waalwijk, Netherlands).

Typically, amounts of 0,1-25 wt. -% of crosslinking agents with respect to the dry protein weight are required. It may also be advantageous to use a combination of at least two different crosslinking agents, e.g. having specificity for different reactive groups, such as a (di)aldehyde to react with amino groups, a carbodiimide or a diamine to react with carboxyl groups, and a polyaziridine or polyepoxide to crosslink carboxy, amide, hydroxyl and amine groups in order to obtain improved overall results. The crosslinking systems used preferably are water-based and commercially available.

The film forming properties, drying characteristics and rheology of the dispersions, and the appearance and mechanical properties and water resistance of the final coatings are very much influenced by the choice and amount of the crosslinking agent(s). For example, glyoxal, which is one of the preferred crosslinking or curing agents, gives slightly yellow or even dark brown films with increasing amount of this reagent, whereas the polyaziridines and the particularly preferred polyepoxides give bright colorless films regardless of the amount of reagent used.. Surprisingly, the polyaziridines and the polyepoxides, if used separetely or in combination with each other or with other crosslinkers, considerably enhance the protective properties of the protein coatings, especially the water resistance of the films can easily be increased by the use of these reagents. The polyaziridines may have certain disadvantages compared with the polyepoxides, because of their price and some toxicological concerns. It is well known that the use of the polyaziridines may be restricted due to these properties. (Robert D. Athey in *Additives for water-borne coatings*, Part 7: Curatives, European Coatings Journal 11/1996, 569). Therefore, they are only used in speciality applications, especially as hardeners in silver halide based photographic layers, as described in DE 4016533. These disadvantages of the polyaziridines do not apply to the particularly preferred polyepoxide crosslinkers

The crosslinking agents may be added to the protein dispersion or solution at any time during the preparation of the dispersion or solution. In some cases it is advantageous to add one or more crosslinkers to the final protein dispersion or solution, or to provide a crosslinking solution in a two-pack system which is mixed to the protein solution or dispersion prior to its application onto the article to be coated.

### 3. Aqueous acids/bases

Acids and or bases are usually required to properly adjust the pH value during the preparation of the dispersions and of the final formulation of the dispersions. The pH value can change at different time points during the preparation because the distinct chemical steps may require different levels for chemical activation. For instance, the crosslinking reactions require different pH values for optimal adjustment of the reaction course. The methylolamide cures, e.g. MF and UF and epoxy resin curatives are acid-catalysed, whereas carbodiimides require pH values in the 8-9 range to be sufficiently stable. In general, the use of volatile organic acids such as acetic acid, formic acid and volatile bases like ammonia is preferred, because non-volatile reagents are remaining as salts and were found to impart the water resistant properties of the protective films. Furthermore, residues of strong halide or sulfur acids could remain as corrosion catalysts, and high salt loads would affect surfactants, solubilising anionic residues of the peptide chains and the colloidal stability. This does not apply to one exception, namely if the basic salts of polyvalent cations such as calcium and zinc are used which can function as bases and as well as crosslinking agents.

### 4. Plasticisers

In a further preferred embodiment, a plasticiser is used in the coating composition of the invention. The plasticisation process aids the movement of the molecules around to the correct geometry and the chain flexibility to get to the curing reactants. Suitable plasticisers are polyols such as ethylene glycol, propylene glycol, glycerol, di- and polyethylene glycols, di- and polypropylene glycols, 2-methyl-1,3-propanediol, sugar alcohols such as sorbitol, mannitol, xylitol, isosorbide etc., hydroxyl acids such as lactic acid, citric acid and gluconic acid, hydroxyl esters such as lactic and citric acid monoalkyl esters, sugars such as glucose, fructose, saccharose and xylose, sulphonamides such benzenesulphonamide, toluenesulphonamide and ethanesulphonamide and the N-alkyl, N,N-dialkyl and N-phenyl derivatives thereof Combinations such as butyl acetate and dibutyl phthalate can also be used. The plasticisers are used in particular in amounts of about 5-50 wt.-% with respect to the dry protein weight, preferably in amounts of about 10-30 wt.-%, most preferably about 20 wt.-%.

### 5. Surfactants/emulsifiers

In another preferred embodiment surfactants or emulsifiers may advantageously be used e.g. to increase the wetting performance during the application of the coating dispersion or solution, in amounts of up to about 5 wt-%, preferably about 0,01-0,5 wt.-% with respect to the dry protein weight. Common soaps such as (potassium or sodium) stearate, other anionic surfactants such as alkaline metal and ammonium salts of alkyl-, aryl-, alkaryl-, and aralkylsulfonates, -sulfates and -polyethersulfates, the corresponding phosphates and phosphonates, cationic surfactants such as alkyl ammonium salts, non-ionic surfactants such as alkoxylated fatty acids, esters, alcohols, amides, amines and alkylpolyglycosides, 6-0-monoesteralkylglycosides, alkylglucamides, sucrose esters or zwitterionic surfactants, or any combination thereof, can be used.

### 6. Adhesion improvers

According to the present invention, the free fatty acids in the coating composition may improve the adhesion of the coating to the substrate material. Therefore, in still another preferred embodiment the fatty acids may be present at levels of 0-10 wt.-%, preferably at 1-5 wt.-%, with respect to the dry protein weight. Suitable fatty acids include C12-C20 fatty acids, for example lauric acid, palmitic acid, stearic acid, oleic acid and mixtures thereof, or vegetable oil such as soybean oil. Other adhesion improvers used in the resins industry are the so-called tackifiers, which can in general be added as adhesion improvers.

### 7. Organic and/or inorganic fillers and binders

The coating composition may also contain organic and/or inorganic fillers and binders. Organic fillers include cellulosic material such as cellulose or other polysaccharides such as starch, most preferred corn starch, potato starch, wheat starch, tapioca starch, waxy rice starch, high amylose corn starch, amylose, waxy rice starch, oat starch, sorghum starch, chemically modified starch or pre-gelatinised starch; or a polymer, in particular an acrylic resin, polyvinyl acetate, polyurethane; or an inorganic filler, preferably calcium carbonate, carbon, silica or a silicate, calcium sulphate; or any combination thereof. Said fillers may be present at levels of up to about 50% of the dry protein weight, preferably at about 3-30 wt.-% of the dry protein weight.

### 8. Biocides

The addition of a biocide may be required for maintaining the inhibition of fungi or bacteria, especially if the ready formulated dispersions are not applied to the substrates in due course, but remain stored for longer times. Biocides suited to fulfil this requirement are commercially available water-based, VOC-free industrial biocides, e.g. the Proxel® preservatives from Zeneca Specialities (Frankfurt, Germany). Examples for other biocides are benzoates and sorbates. The preferred amount of such biocides are up to about 3 wt.-%, preferably about 0,1 -3 wt.-% of the final formulation.

### 9. Colour pigments and flavours

These additives may be added to improve the appearance and attractiveness of the coatings. In principle, there are no restrictions here to achieve any kind of effects. To illustrate this, a nice red colour of the coatings was obtained by using Colanyl Red FGRX- 100® (Clariant AG, Muttenz, Switzerland), or a hiding or reflective white appearance is obtained by using titanium dioxide pigments, e.g. Tipure R-960 ® (DuPont, Wilmington, DE, USA). Pleasant odours are obtained by using terpenes or pleasant smelling fatty acid esters, e.g. a lemon-like odour is obtained by adding 0,1 wt.-% of limonene (Aldrich, Steinheim, Germany). The pigments and/or flavours may be present at levels of up to about 5 wt.-% of the dry protein weight each.

### 10. Speciality additives

Other additives may give some supplementary improvements, for instance with respect to the water-resistance of the coatings. Examples include, but are not limited to, sodium siliconates, e.g. NaOSiOMe, ambergum and alkylketene dimers, e.g. commercially available additives like Aquapel 320® (Hercules, Wilmington, DE, USA). Other useful additives are defoamers, dispersants, thickeners or speciality coalescent agents commonly used in the resins industry. As a thickener, for instance, hydroxyethylcellulose e.g. Natrosol 250 MXR® (Hercules) can be used. As a defoamer, for instance, Foamaster VL® (Process Chem. Division, Diamond Shamrock Chemicals, USA) can be used. These additives may cause decreased water resistance of the films which may be compensated by improved crosslinking of the protein. Therefore these speciality additives may be used in amounts of only up to about 5 wt.-% relative to the protein content of the dispersions.

For the preparation of the protein composition of the present invention a proteinaceous material such as a particular protein or a mixture of proteins is usually dispersed in an aqueous medium such as the protein content is about 5-50 wt.-%, preferably about 10-35% wt.-%, and most preferred about 10-25 wt.-% by preferably stirring with water in a reaction vessel. The protein dispersion is then optionally pre-treated as described above and then the coating dispersion or solution is prepared by adding one ore more of said crosslinking agent(s) under properly adjusted pH conditions by acids or bases.

The reaction temperature of the crosslinking process is usually at about 20-90°C, preferably at about 20-70°C, and the pH is usually adjusted at about 3-12, preferably at about 4-10, usually dependent on the protein and crosslinking agent used.

The crosslinking reaction is preferably carried out until a fine dispersion or solution is obtained, usually the reaction times require about 30 mm to about 12 hours, depending on the reaction temperature and on the crosslinking agent used. During this reaction, the crosslinking process takes place completely or only partially, depending on the reaction temperature and on the crosslinking agent used. In the last case, a more complete crosslinking (reaction of residual crosslinking functionality) may take place not until the final drying process (curing, see below) has been performed. It is also possible to add the crosslinker or a mixture of crosslinkers at ambient temperature under stirring and without heating. In this special case, most of the crosslinking reaction occurs during drying of the wet films, optionally under heating as described below. The amount of water is kept as low as possible, e.g. about 10-80 wt.-%, especially about 20-60 wt.-% of the total of water and protein mixture. If desired, a co-solvent such as an alcohol, e. g. methanol or ethanol may be present at levels of up 50% of the total solvent weight.

Any of the other additives described above can be preferably added thereafter but the chronological order of each being not critical for the whole process. For instance, the additives may equally well be added to the protein dispersions or solutions prior to performing the crosslinking reaction. In those cases where it is advantageous to add one or more crosslinking agent to the final protein dispersion or solution, or if it is desired to provide the crosslinking solution in a two-pack system, the crosslinkers are mixed to the protein solution or dispersion at the end of the preparation procedure or shortly prior to the application onto the technical article to be coated.

The invented protein coating dispersions or solutions can be applied by conventional means such as spraying, dipping, brushing, casting etc.. The thickness of the applied coating depends on the solids content of the dispersion and on the total amount applied to the surface and is about 5-1000 µm, preferably about 20-100µm when wet, and about 20-100 µm, preferably about 15-80 µm after drying.

The coating dispersion or solution may be preferably applied on the surfaces of finished technical articles or of intermediate technical articles to be protected during the course of a production process, e.g. the assembly of the finished technical articles. The surfaces of the intermediate or finished technical articles may consist of various materials, like metals such as steel, aluminium, copper, zinc etc. or alloys thereof, glass, ceramics such as alumina, silica, zeolites etc., rubbers, polyurethanes, polyacrylates, polyethylenes, polypropylenes, polyesters, concrete, stones, wood, cork, wallpaper or cardboards, or any combination thereof.

After application of the coating dispersion or solution, the coated surface is usually dried and/or cured, e.g. in an ambient or hot air vented drying device, or in an radiation drying tunnel, at temperatures of about 20-120°C, preferably of about 40-90°C. In most cases temperatures below about 80°C (force drying) are sufficient, but very hard films may be prepared by stoving or baking above this temperature, e.g. up to about 120°C. In general, the conditions applied are characterised by the residence time of the technical article or workpiece in an oven and the temperature of the object being dried. For instance, if the substrate consists of metals, plastics and glass, such as on automobiles or on parts thereof, the drying temperature is at about 40-75°C. The drying time required depends on the film thickness and the drying temperature, and may be at about 1-360 minutes.

Radiation curing can be accomplished by IR or UV radiation or by microwaves, the latter being only suitable for non-metallic substrates. The heat which is produced here, induces chemical reactions which lead to crosslinking, whereas infrared curing operates by the direct radiation of heat, e.g. in drying tunnels for cars as an additional energy source along with the circulating air.

The present invention also refers to a particular casein composition, comprising the reaction mixture of
(a) about 5-25 wt.-%, preferably 10-25 wt.-%, in particular 15-20 wt.-% casein and optionally soy protein;
(b) about 0,1-25 wt.-%, preferably about 0,5-20 wt.-%, in particular about 1-15 wt.-% of a polyepoxide and optionally
(c) about 5-50 wt.-%, preferably 10-30 wt.-% of glycerol; optionally
(d) up to about 10 wt.-%, preferably about 1-5 wt.-% stearic acid; optionally
(e) urea, guanidine and/or calcium hydroxide; and optionally
(f) an antimicrobial agent.

The adhesion of the protein coatings according to the present invention is generally strong, mechanically resistant to scratches, resistant to all weathers, water treatment, dilute sulfuric acid (5%), soot, alkali (0, 1 % NaOH), dust, dirt, iron dust and sparks treatment. Colouring pigments containing dispersions may be used to cover concrete, stones, wallpapers, cardboards, wood and the like, whereby drying at ambient temperatures for prolonged time periods provide similar coatings as obtained by the force drying procedures for shorter time periods.

If not dedicated for relatively more durable protection, like for concrete, wood, graffiti protection, ceramics and the like, but for the much shorter-termed protection, e.g. for glass panes or fabric-new cars, the temporary coating may be easily removed with water, optionally with hot water, optionally using detergents or proteolytic enzymes or both, under mechanical aid, such as brushing, wiping, or high-pressure treatment. Proteolytic enzymes are particularly effective for removing strongly adherent coatings, optionally after impregnation of the coating with an enzyme solution for some time before the conventional washing procedure. Examples of useful enzymes include proteases and peptidases like alcalase, aminopeptidases K/M, maxatase, carboxypeptidases A/B/Y, subtilisin® (Carlsberg, Denmark), and the like, all of which are either commercially available (from Sigma, Aldrich, Boebringer Mannheim, or from Merck KGA, Darmstadt, Germany) or are contained virtually in any commercially available detergent formulation.

The coatings of the present invention have good adherence, sufficient mechanical, moisture and water resistance and, if desired, they can be effectively removed by means of mechanical and water treatment, optionally containing detergents and proteolytic enzymes. These features constitute an important advantage over the state of the art materials currently used, which require manual work like peeling off the coating. One further advantage over the state of the art coatings is that no plastic waste materials need to be collected, stored, recycled or deposited. The aqueous residues of the coating are biodegradable and therefore may be discharged with the waste water.

Therefore, another embodiment of the present invention is an article itself preferably a technical article which is coated according to the present invention, in particular wherein the thickness of the wet coating is about 5-1000 µm, preferably about 20-100 µm and of the dried coating is about 2-100 pm, preferably about 15-80 µm.

Preferred coated technical articles are a car, a bicycle, a pipe, a frame, a ceramic, a stone, a concrete, a glass paint, a wood, a cork, a wallpaper, a cardboard; or any part thereof.

The invention will be further described by reference to the following detailed examples. These examples are not meant to limit the scope of the invention that has been set forth in the foregoing description. It should be understood that many variations and modifications may be made while remaining within the scope of the invention.

### Examples

### Comparison Example 1:

Technical casein (15 g, particle size 50 mesh, obtained from Havero Hoogwegt BV, HB Gorinchem, Netherlands) was added to a mixture of 82 ml water and 3 ml 87% glycerol (Merck, Darmstadt, Germany) under continuous stirring. The pH was adjusted to 9,0 using 25% ammonia (total: 0,015 mol NH₃). After stirring for 20-30 minutes, all casein was dissolved and the solution was placed in a water bath at 70°C. The protein was crosslinked by the addition of 2,25 ml of an aqueous glyoxal solution (40% w/w, Clariant AG, Muttenz, Switzerland) and further stirring for 30 min. After cooling to ambient temperature, 0,3 ml of an antimicrobial agent (Proxel GXL®, Zeneca Specialities, Frankfurt, Germany) was added. The viscosity of the solution was about 300 cPs, as determined with a Brookfield viscosimeter.

### Comparison Example 2:

The solution obtained from example 1 was sprayed onto a glass substrate, dried at ambient temperature and subsequently cured in an oven at 80°C for 10-30 minutes. Alternatively, the solution was applied at different thickness (80 µM, 120 µm, 300 µm) onto the glass plates. The solution could be applied equally well onto metal surfaces, e.g. onto tins and topcoated metal surfaces. The resulting films were very hard and had an excellent adhesion on the substrates. The film had a high water resistance, e.g. it was resistant to immersion in water for several days.

### Comparison Example 3:

Example 1 was modified as follows:
a) Stearic acid (0,75 g, 5% with respect to protein) was added at 70°C and emulsified into the casein using an ultrathurrax. The resulting coating had an improved adhesion to apolar coatings, an improved water resistance and improved plasticity.
b) Urea (0,75 g, 5% with respect to protein) was added to the water/glycerol mixture. The resulting coating had an improved adhesion to glass and metals.
c) Calcium hydroxide (0,15 g) was added to the water/glycerol mixture. The protein had a higher degree of crosslinking, which was proven by the improved water resistance and less swelling sensitivity with water.

### Comparison Example 4:

Casein (50 g) was added to a mixture of 400 ml water and 12,5 ml 87% glycerol under continuous stirring. The pH was continuously adjusted to 9,0 using 25% ammonia. After all casein had dissolved, 20 g of soy protein isolate (Soya-L, Unisol L, Loders en Croklaan B.V., Wormerveer Holland, Netherlands) was slowly added to obtain a smooth dispersion. Then 3,5 ml of an aqueous glyoxal solution (40% w/w, Clariant AG, Muttenz, Switzerland) and 3,5 ml of urea-formaldehyde resin (URSMV from BASF AG, Ludwigshafen, Germany) were added and the dispersion was held at 70°C for 30 minutes under stirring. After cooling to ambient temperature, 0,3 % of an antimicrobial agent (Proxel GXL®, Zeneca) was added. The viscosity of the dispersion obtained was about 480 cPs (measured with a Brookfield viscometer at 60 rpm).
The dispersion was applied, dried and cured as described in Example 2. The resulting films were very hard and had excellent protective properties, e.g. water resistance.

### Comparison Example 5:

Technical casein (750 g) was dissolved in 8 litres of water under continuous stirring at ambient temperature. The pH was continuously adjusted to 9,0 using 25% ammonia. After all casein had dissolved, 750 g of soy protein (Soya-L) was added. Then 300 ml of 87% glycerol and 75 g of guanidine hydrochloride were added. After complete dissolution of the guanidine, the dispersion was heated to 60°C and 300 ml of an aqueous glyoxal solution (40% w/w, Clariant) was added. After 30 minutes reaction and cooling to ambient temperature, 0,3 % of an antimicrobial agent (Proxel GXL®, Zeneca) was added. The dispersion was applied with a wet thickness of 300 mm or 600 mm, dried and cured as described in Example 1. The water resistance of the film was determined using a spot test and a swelling test. For the results, see example 6.

### Example 6: Water resistance tests:

a) Spot test: A drop of water was placed on the surface of the protective protein film, for one minute or for thirty minutes. The drop was wiped off using a piece of paper towel. The water resistance was then assessed by observing the film at the spot where the drop had been, and was given a rating from 0 to 5. Here, 0 stands for very poor water resistance (the drop leaves a hole in the film surface) and 5 stands for excellent water resistance (no visually detectable effect whatsoever on the film surface).
b) Swelling test: A standard size disc was cut from the thick film (Petri dish casting) was soaked in water for 1 hr and 24 hours. The swelling is then expressed as the relative increase in diameter of the test disc in %: (dt/dO * 100%).
c) Water immersion test: The coated article was immersed in water for 1-24 hours. After the given time, slight or reinforced rubbing with a finger tip revealed the water resistance of the protective protein film. By scratching with a finger nail or by brushing the films could be removed easily after a prolonged period of immersion in water.
d) The coated article was kept in the open country and exposed to the climate for several days or for several weeks (exposure to rain, sun, dust, wind and and sun). The films and the coated surfaces were then judged by their visible appearance.

Results: The spot test value was at least 4, and the swelling after 24 hr was 11 % for the film prepared according to example 5. A film produced with the same dispersion but without crosslinking had a spot test value of 0 and was dissolved completely after 24 hr.

### Comparison Example 7:

150 g of 90 mesh technical casein (Havero Hoogwegt) was slowly added to 850 ml of water containing 15 ml Glycerol (87%, Merck) and 7,5 g of urea (Merck) while stirring. During the addition of the casein (roughly 10 g per minute), the pH was adjusted to 8,0 using a 25% ammonia solution. After complete dispersion of the protein, 1,5 g of Ca(OH)₂ was added very slowly under vigorous stirring. Then the dispersion was heated to 60°C while stirring. Then 7,5 ml of the polyaziridine crosslinker CX-100 (Zeneca, Waalwijk, Netherlands) were added and the dispersion was stirred for 30 min. After cooling, the dispersion has a viscosity of about 150-200 cP and a solids content of about 15%. When applied to coated metal plates, a very hard clear shiny coating was formed, giving excellent scratch resistance and having very good adhesion. After curing at 80°C for 10 min, the coating was dipped into water for at least 48 hours without detaching from the surface. The coated metal plates coated with this protein formulation could also be dipped into 0,05 M Tris buffer at pH = 9,0 at 50°C for at least one hour. Subsequent brushing of the coating with household detergent and a nylon brush removed the coating only under very enforced conditions. After treatment with up to 2% of a commercially available proteolytic enzyme such as subtilisin® (Carlsberg, Denmark), the coaling was easily wiped off with a nylon brush and household detergent.

### Comparison Example 8:

150 g of technical grade gelatine (Smits Vuren, Gorinchem, Netherlands) were soaked in 400 ml cold water containing 30 ml of glycerol (87%, Merck) and 15 g of urea (Merck) during 15 min. The reaction temperature was ten raised to 60°C to dissolve the gelatine. When the gelatine was completely dissolved, 150 g of casein were added (as described in example 7) using 25% ammonia to keep the pH at 8,0. After complete dissolution of the casein, 3 g of Ca(OH)₂ were added slowly while stirring vigorously. Then 15 ml of the polyaziridine crosslinker CX-100 (Zeneca, Waalwijk, Netherlands) were added and the dispersion was stirred for 30 min. This solution was sprayed on solids. If sprayed when warm, the sprayed drops hit a cold surface and immediately gelation of the film forming material occured, thus providing excellent setting properties, and allowing the application of a very thick coating by spraying.

### Comparison Example 9:

Technical casein (15 g, particle size 50 mesh, from Havero Hoogwegt BV, HB Gorinchem, Netherlands) was added to a mixture of 82 ml water (82 ml) and 87% glycerol (3 ml, from Merck, Darmstadt, Germany) under continuous stirring. The pH was adjusted to 9,0 using 25% ammonia (total: 0,015 mol NH₃). After stirring for 20-30 minutes, all casein was dissolved and the solution was placed in a water bath at 70°C. The protein was crosslinked by the addition of 2,25 ml of an aqueous glyoxal solution (40% w/w, Clariant AG, Muttenz, Switzerland) and further addition of 0,75 ml of methylbiphenyldiisocyanate (Merck, germany). After cooling to ambient temperature, 0,3 ml of an antimicrobial agent (Proxel GXL®, Zeneca Specialities, Frankfurt, Germany) was added. The viscosity of the solution was about 300 cPs, as determined with a Brookfield viscosimeter. This procedure provided reduced swelling properties of wet films, compared to films prepared according to example 1.

### Comparison Example 10:

Technical casein was processed analogously as described in example 9. After the addition of 2,25 ml of the aqueous glyoxal solution and crosslinking with 0,75 ml of the methylbiphenyldiisocyanate, 3 ml of epoxidised soy bean oil (Akzo Nobel, Arnhem, Netherlands) was added to the dispersion by vigorous stirring. After cooling to ambient temperature, 0,3 ml of an antimicrobial agent (Proxel GXL®, Zeneca Specialities, Frankfurt, Germany) was added. After cooling to ambient temperature films can be prepared in the usual manner. This procedure provided reduced swelling properties of wet films, compared to films prepared according to examples 1 and 9.

### Example A:

150 g of 90 mesh technical casein (Havero Hoogwegt) was slowly added to 850 ml of water containing 15 ml glycerol (87%, Merck) and 7,5 g of urea (Merck) while stirring. The pH was adjusted to 9.0 with 25% ammonia solution. Then casein was added very slowly to avoid the formation of lumps (ca. 5-10 g per minute) under stirring and heating at 60°C. During the casein addition, the pH was kept constant at ca. 9.0 with the aqueous ammonia solution. Too much vigorous stirring would cause foaming which would lead to the formation of gas bubbles in the films. On the other hand, too little stirring would cause an inefficient formation of the desired protein dispersion. After complete dispersion of the protein, a 2% milky dispersion of Ca(OH)₂ (1.5 g) was added very slowly under vigorous stirring at 30°C. Then the dispersion was heated to 60°C while stirring. After cooling to ambient temperature, potassium sorbate (2.0 g, Nutrinova GmbH, Frankfurt) was added. The pH value was ca. 8-9. Directly after the preparation of this dispersion, or optionally prior to its application to a solid (e.g. a glas pane, a car surface, a can), the polyepoxide reagent Kycoat® (Hercules Corp., Siegburg, Germany) was added. The amount of crosslinking reagent was adjusted to 5%, 10% and 15% w/w relative to the protein content. The films were applied (150 µm wet) and cured at 80°C for 5-10 min in an oven to give clear, transparent and scratch resistant films which then were treated as described in example 6c) for 14 hours and could only be removed by scratching with a finger nail or by enforced brushing or rubbing. The very bright yellow formulations were stable for at least 4 weeks at room temperature without visible changes.

### Comparison Example 11:

The same protein dispersion as described in example A was prepared, except that instead of the polyepoxide the polyaziridine crosslinker CX-100 (Zeneca, Waalwijk, Netherlands) was added in the same amounts relative to the protein content. The films prepared from this dispersion had a similar appearance, but the dispersion could not be stored for longer times, because they gave a gelatinous mass and then solidified on standing at room temperature. Moreover, the films prepared from these dispersions gave less water-resistant films as compared to those films which had been prepared according to example A.

Example B: A shower of sparks was produced with a grinding machine ana an iron nail. The sparks which hit on the surfaces of a glas pane and of a metal sheet (the latter was topcoated with an automotive resin from Herberts, Wuppertal, Germany) which had been coated with the protein dispersions, e.g. from the examples A or B, caused no visible damage of the films.

### Example C:

The same dispersion was prepared as described in example 1. In addition, several portions were mixed at room temperature with 0.1%, 0.3%, 0.5%, 1% and 1.5% the polyepoxide reagent Kycoat® (Hercules Corp., Siegburg, Germany). With increasing amounts of this crosslinking agent, the water resistance of the films, as determined according to the tests described in example 6, was considerably improved.

### Example D:

The same dispersions were prepared as described in example 3. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example E:

The same dispersions were prepared as described in example 4. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example F:

The same dispersions were prepared as described in example 5. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example G:

The same dispersions were prepared as described in example 7. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example H:

The same dispersions were prepared as described in example 8. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example I:

The same dispersions were prepared as described in example 9. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

### Example J:

The same dispersions were prepared as described in example 10. In addition, several portions were mixed at room temperature with 0.1%, 0.3%, 0.5%, 1% and 1.5% of a polyamide polyamine resin which had been treated the polyepoxide reagent Kycoat® (Hercules Corp., Siegburg, Germany). With increasing amounts of this crosslinking agent, the water resistance of the films, as determined according to the tests described in example 6, was considerably improved.

## Claims

1. A method for preparing a coating, wherein a reaction mixture is applied on a solid, which reaction mixture is obtainable from a process comprising the following steps:
(a) dispersing about 5-50 wt.-%, preferably about 10-35 wt.-%, in particular about 10-25 wt.-% of a proteinaceous material in water,
(b) adding about 0,1-25 wt.-%, preferably about 1-25 wt.-%. in particular about 5-20 wt.-% of a crosslinking agent, and
(c) allowing reaction between said proteinaceous material and a crosslinking agent containing an epoxide or polyepoxide, preferably an epichlorohydrin-modified polyamine, epichlorohydrin-modified polyamide, epichlorohydrin-modified polyamidoamine or epichlorohydrin-modified amine-containing backbone polymer; or any combination thereof.

2. A method according to claim 1, wherein said proteinaceous material is selected from an animal-, plant- and/or microbe-derived protein, preferably from keratin, gelatine, collagen, gluten, soy protein, casein, or any combination thereof.

3. A method according to claim 1 or 2, wherein said proteinaceous material is pre-treated with heat; a surface-active compound, preferably dodecyl sulphate; a chaotropic agent, preferably urea, guanidine, guanidinium salt or calcium chloride; an acid; a base; a reducing agent, preferably sulfite, bisulfite or hydrogensulfide; or a proteolytic enzyme.

4. A method according to any of the claims 1-3, wherein said crosslinking agent further contains a crosslinking agent selected from formaldehyde; glyoxal; glutaraldehyde; diisocyanate; a (poly)isocyanate; a bis(meth)acrylate, preferably N,N-ethylenebis-(meth)acrylamide; a (poly)aziridine; a carbodiimide; a resin, preferably melamine-formaldehyde (MF), urea-formaldehyde (UF), benzoguanidine-formaldehyde; a diglycidyl ether, a glycidyl ester; a polyvalent cation, preferably calcium or zink; an acetoacetate; or any combination thereof.

5. A method according to any of the claims 1-4, wherein said process is carried out at about 20-90°C, preferably at about 20-70°C.

6. A method according to any of the claims 1-5, wherein said process is carried out at a pH of about 3-12, preferably about 4-10.

7. A method according to any of the claims 1-6, wherein the amount of water is about 10-80 wt.-%, preferably about 20-60 wt.-% of the total of proteinaceous material and water.

8. A method according to any of the claims 1-7, wherein about up to 50 wt.-% of a co-solvent, preferably methanol or ethanol, is added in said process.

9. A method according to any of the claims 1-8, wherein about 5-50 wt.-%, preferably about 10-30 wt.-%, most preferably about 20 wt.-% of a plasticiser is added to said reaction mixture.

10. A method according to claim 9, wherein the plasticiser is selected from a polyol, preferably ethylene glycol, propylene glycol-, glycerol, di- and polyethylene glycols, di- and polypropylene glycols or 2-methyl-1,3-propandiol; a sugar alcohol, preferably sorbitol, mannitol, xylitol or isosorbide; a hydroxyl acid, preferably lactic acid, citric acid or gluconic acid; a hydroxyl ester, preferably lactic or citric acid monoalkyl ester-a sugar, preferably glucose, fructose, saccharose or xylose; a sulphonamide, preferably benzenesulphonamide, toluenesulphonamide, ethanesulphonamide, N-alkylsulphonamide, N,N-dialkylsulphonamide or N-phenyl-sulphonamide; or any combination thereof, preferably a combination of butyl acetate and dibutyl phthalate.

11. A method according to any of the claims 1-10, wherein about up to 5 wt.-%, preferably about 0,01-0,5 wt.-% of a surfactant is added to said reaction mixture.

12. A method according to claim 11, wherein said surfactant is selected from a stearate; an anionic surfactant, preferably an alkaline metal salt or an ammonium salt of an alkl-, an aryl, an alkaryl-, an aralkylsulphonate, -sulphate, -polyethersulphate, -phosphates or - phosphonate; a cationic surfactant, preferably an alkyl ammonium salt, a non-ionic surfactant, preferably an alkoxylated fatty acid, ester, alcohol, amide, amine or alkylpolyglycoside, a 6-O-monoesteralkylglycoside, an alkylglucamide, a sucrose ester or a zwitterionic surfactant; or any combination thereof.

13. A method according to any of the claims 1-12, wherein up to about 10 wt.-%, preferably about 1-5 wt.-% of an adhesion improver is added to said reaction mixture.

14. A method according to claim 13, wherein the adhesion improver is selected from a C12-C20 fatty acid, preferably lauric acid, palmitic acid, stearic acid, oleic acid or mixtures thereof, or a vegetable oil, preferably a soybean oil.

15. A method according to any of the claims 1-14, wherein up to about 50 wt.-%, preferably about 3-30 wt.-% of a filler is added to said reaction mixture.

16. A method according to claim 15, wherein the filler is selected from an organic filler, preferably a cellulosic material, in particular cellulose; a polysaccharide, in particular starch, most preferred corn starch, potato starch, wheat starch, tapioca starch, waxy rice starch, high amylose corn starch, amylose, waxy rice starch, oat starch, sorghum starch, chemically modified starch or pre-gelatinised starch; or a polymer, in particular an acrylic resin, polyvinyl acetate, polyurethane; or an inorganic filler, preferably calcium carbonate, carbon, silica or a silicate, calcium sulphate; or any combination thereof.

17. A method according to any of the claims 1-16, wherein up to about 3 wt.-%, preferably about 0, 1-3 wt. -% of a biocide is added to said reaction mixture.

18. A method according to any of the claims 1-17, wherein up to about 5 wt.-% of a colouring agent is added to said reaction mixture.

19. A method according to any of the claims 1-17, wherein up to about 5 wt.-% of a flavour is added to said reaction mixture.

20. A method according to any of the claims 1-19, wherein said reaction mixture is applied on a solid by spraying, dipping, brushing or casting.

21. A method according to any of the claims 1-20, wherein said solid is selected from an article, preferably a technical article, in particular a metal, preferably steel, aluminium, copper, zinc or alloys thereof, glass- a ceramic, preferably alumina, silica or a zeolite; a rubber; a polyurethane; a polyacrylate; polyethylene; polypropylene; a polyester; or any combination thereof.

22. A method according to any of the claims 1-21, wherein in a further step the coated solid is dried and/or cured.

23. A method according to claim 22, wherein the drying and/or curing step is carried out at a temperature of about 20-120°C, preferably at about 40-90°C and/or by radiation, preferably by IR-, UV- or microwave-radiation.

24. A method according to any of the claims 1-23, wherein the coating protects and/or paint the surface of an technical article.

25. A method according to any of the claims 1-24, wherein the coating is a temporary coating.

26. A method according to claim 25, wherein the temporary coating is removable by hot water treatment with mechanical aid, after treatment with a detergent or an enzyme, or any combination thereof.

27. A casein composition, comprising the reaction mixture of
(a) about 5-25 wt.-%, preferably 10-25 wt.-%, in particular 15-20 wt.-% casein and optionally soy protein;
(b) about 0,1-25 wt.-%, preferably about 0.5-20 wt.-%, in particular about 1-15 wt.% of a polyepoxide and optionally
(c) about 5-50 wt.-%, preferably 10-30 wt.-% of glycerol; optionally
(d) up to about 10 wt.-%, preferably about 1-5 wt.-% stearic acid; optionally
(e) urea, guanidine and/or calcium hydroxide; and optionally
(f) an antimicrobial agent.

28. An article coated according to a method of any of claims 1-26 or with a casein composition according to claim 27.

29. An article according to claim 28, wherein the thickness of the wet coating is about 5-1000 µm, preferably about 20-100 µm.

30. An article according to claim 28, wherein the thickness of the dried coating is about 2-100 µm, preferably about 15-80 µm.

31. An article according to any of claims 28 - 30, wherein the article is a technical article, in particular a car, a bicycle, a pipe, a frame, a ceramic, a stone, a concrete, a glass paint, a wood, a cork, a wallpaper, a cardboard; or any part thereof.
